# EUROPÄISCHE PATENTANMELDUNG

(11) **EP 0 841 515 A2**
(43) Veröffentlichungstag der Anmeldung: **13.05.1998**
(21) Anmeldenummer: 97118642.4
(22) Anmeldetag: 27.10.1997
(51) Int. Cl.: F16L 41/04

(54) **Bohrer**

(30) Priorität: 05.11.1996 DE 19645576
(71) Anmelder: KÜBA KÄLTETECHNIK GmbH, 82065 Baierbrunn (DE)
(72) Erfinder: Fackler, Thomas, 81929 München (DE)
(74) Vertreter: Finsterwald, Manfred, Dipl.-Ing., Dipl.-Wirtsch.-Ing.

(57) **Zusammenfassung**

Die Erfindung betrifft einen Bohrer, insbesondere zur Herstellung von Rohranschlußbuchsen in Kältemittel transportierenden Rohren, mit einem die Bohrspitze bildenden und im wesentlichen zylindrischen Schneidbohrer (1) zum Vorbohren des Werkstücks und einem in Bohrvorschubrichtung hinter dem Schneidbohrer angeordneten Fließbohrer (2) zum Herstellen einer Buchse aus dem die vorgebohrte Öffnung begrenzenden Werkstückmaterial, der sich in Richtung des Schneidbohrers verjüngt und zumindest bereichsweise in einer sich senkrecht zu seiner Längsachse erstreckenden Ebene eine nicht-kreisförmige, insbesondere polygonartige Querschnittsfläche aufweist.

## Beschreibung

Die Erfindung betrifft einen Bohrer, insbesondere zur Herstellung von Rohranschlußbuchsen in Kältemittel transportierenden Rohren.

An die Sauberkeit von in der Kältetechnik eingesetzten Kältemitteln werden hohe Anforderungen gestellt. Es existieren entsprechende DIN-Normen, die von den Kältemitteln erfüllt werden müssen.

Zur Herstellung von Rohrleitungssystemen, z.B. Wärmetauschern, ist es häufig erforderlich, an ein das Kältemittel transportierendes Rohr mehrere Querleitungen anzuschließen. Dies kann dadurch erfolgen, daß in der Rohrwandung Anschlußbuchsen für die Querleitungen ausgebildet werden.

Es ist bekannt, in Rohren und anderen dünnwandigen Werkstücken derartige Buchsen mittels eines Fließbohrers herzustellen, der das Werkstückmaterial zunächst aufweicht und anschließend plastisch zur Buchse verformt.

Nachteilig dabei ist, daß am vom Fließbohrer abgewandten Buchsenende Grate entstehen, die leicht abbrechen und dann als Späne z.B. in das Innere des in einem Kältemittelkreislauf eingesetzten Rohres gelangen können. Die vom umlaufenden Kältemittel mitgeführten Späne können dann angeschlossene Kompressoren in ihrer Funktionsfähigkeit beeinträchtigen. Die in den genannten DIN-Vorschriften geforderte Spanfreiheit des Kältemittels kann nur dadurch eingehalten werden, daß das Kältemittel einem aufwendigen Reinigungsprozeß unterworfen wird.

Es ist eine Aufgabe der Erfindung, einen Bohrer zu schaffen, der es auf möglichst einfache Weise gestattet, Buchsen in einem Werkstück herzustellen, ohne daß auf der vom Bohrer abgewandten Seite des Werkstücks Grate oder Späne verbleiben.

Diese Aufgabe wird erfindungsgemäß im wesentlichen dadurch gelöst, daß der Bohrer einen die Bohrspitze bildenden und im wesentlichen zylindrischen Schneidbohrer zum Vorbohren des Werkstücks und einen in Bohrvorschubrichtung hinter dem Schneidbohrer angeordneten Fließbohrer zum Herstellen einer Buchse aus dem die vorgebohrte Öffnung begrenzenden Werkstückmaterial umfaßt, wobei sich der Fließbohrer in Richtung des Schneidbohrers verjüngt und zumindest bereichsweise in einer sich senkrecht zu seiner Längsachse erstreckenden Ebene eine nicht kreisförmige, insbesondere polygonartige Querschnittsfläche aufweist.

Durch die Erfindung wird somit ein kombinierter Bohrer geschaffen, der zwei unterschiedliche Bohrertypen in einem Bohrwerkzeug vereinigt. Es können daher in einem Arbeitsgang zwei verschiedene Arbeitsschritte unmittelbar aufeinanderfolgend ausgeführt werden. Dabei dient der Schneidbohrer dazu, das Werkstück vorzubohren, während der Fließbohrer das die vorgebohrte Öffnung begrenzende Material aufweicht und daraus die Buchse formt.

Durch das Vorbohren wird in vorteilhafter Weise das Werkstückmaterial, das beim reinen Fließbohren zur Entstehung von Graten und Spänen führen würde, beseitigt, wobei der erfindungsgemäß vorgesehene Schneidbohrer für den Abtransport des weggeschnittenen Materials sorgt.

Mit dem erfindungsgemäßen Bohrer können so in einem einzigen Arbeitsgang grat- und spanfreie Buchsen auf einfachste Weise und in kürzester Zeit hergestellt werden.

In einer Ausführungsform des gemäß der Erfindung ausgebildeten Bohrers ist dieser mehrteilig ausgeführt, wobei er einen lösbar mit dem Fließbohrer koppelbaren Schneidbohrer umfaßt. Ein Vorteil eines solchen zweiteiligen Bohrwerkzeugs ist der, daß Schneidbohrer unterschiedlicher Größe mit verschiedenen Fließbohrern koppelbar sind, so daß für jedes Material und für jede Materialstärke des Werkstücks sowie für die jeweils erforderliche Buchsengröße die optimale Kombination aus Schneidbohrer und Fließbohrer zusammengestellt werden kann. Ein weiterer Vorteil besteht darin, daß der Schneidbohrer weiter verwendbar ist, wenn der Fließbohrer abgenutzt ist, und umgekehrt.

Weitere vorteilhafte Ausführungsformen der Erfindung sind in den Unteransprüchen angegeben.

Die Erfindung wird im folgenden beispielhaft unter Bezugnahme auf die Zeichnung beschrieben; in dieser zeigt:
- Figur 1: eine perspektivische Ansicht einer in Durchsicht gezeichneten Ausführungsform eines erfindungsgemäßen, mehrteilig ausgeführten Bohrers,
- Figur 2: die Einzelteile des Bohrers von Fig. 1, und
- Figur 3: einen Schnitt durch den Fließbohrer des in den Fig. 1 und 2 gezeigten erfindungsgemäßen Bohrers entlang einer dessen Längsachse enthaltenen Ebene.

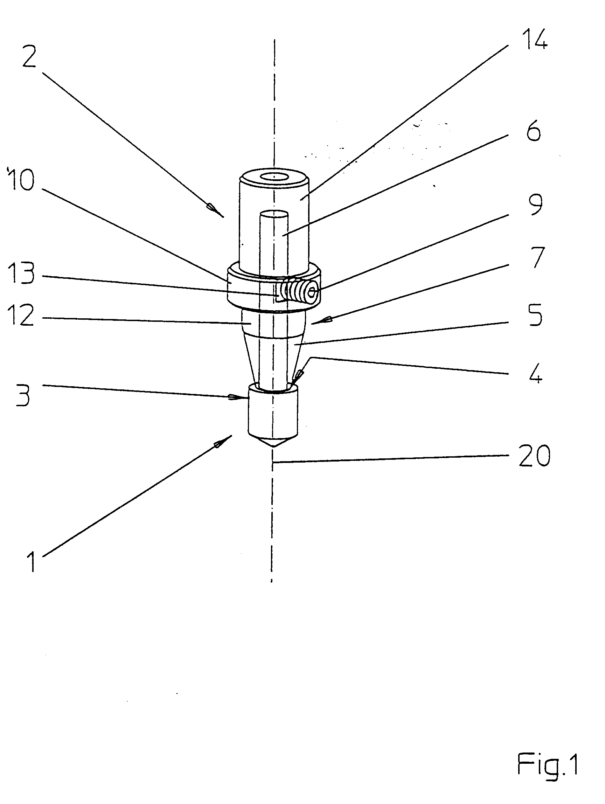

Der in Fig. 1 gezeigte erfindungsgemäße Bohrer ist mehrteilig ausgeführt und umfaßt einen Schneidbohrer 1 und einen Fließbohrer 2, die eine gemeinsame Längsachse 20 aufweisen.

Der Schneidbohrer 1 ist mit in Fig. 1 nicht dargestellten Schneidkanten und diesen jeweils zugeordneten Spannuten versehen, die für einen Abtransport der beim Bohren entstehenden Späne in Richtung des Fließbohrers 2 sorgen. Vorzugsweise sind jeweils zwei oder drei Schneidkanten und Spannuten vorgesehen. Als Schneidbohrer 1 kann der vordere Bereich eines herkömmlichen Bohrers verwendet werden, der insbesondere für Metallwerkstücke wie z.B. Kupferrohre ausgelegt ist, die in der Kältetechnik, beispielsweise zur Herstellung von Wärmetauschern, eingesetzt werden.

An den Schneidbohrer 1 schließt sich ein Abschnitt des Fließbohrers 2 an, der im folgenden mit Polygonabschnit 5 bezeichnet wird und in einer sich senkrecht zur Längsachse 20 erstreckenden Ebene eine nicht-kreisförmige, polygonartige Querschnittsfläche aufweist. Dabei bedeutet "polygonartig", daß die Querschnittsfläche von einem Polygonzug mit abgerundeten Ecken begrenzt wird, wobei sich die Krümmung dieser polygonartigen Begrenzungslinie über den Umfang vorzugsweise nur geringfügig ändert. Daher ist der Polygonabschnitt 5 des Fließbohrers 2 bevorzugt im wesentlichen ein Kegel mit einer nicht wesentlich von der Kreisform abweichenden Querschnittsfläche.

Der Durchmesser des dem Fließbohrer 2 zugewandten Endes 3 des Schneidbohrers 1 ist größer als der des schmalen Endes 4 des Polygonabschnitts 5. Dadurch können die beim Bohren mit dem Schneidbohrer 1 anfallenden und durch die den Schneidkanten zugeordneten Spannuten geförderten Späne problemlos vom Werkstück weg abtransportiert werden.

An den Polygonabschnitt 5 schließt sich ein kreiszylindrischer Abschnitt 12 an, der wiederum in einen im wesentlichen kreiszylindrischen Kragen 10 mit abgeschrägten Kanten übergeht, dessen Durchmesser größer als derjenige des Kreiszylinderabschnitts 12 ist.

An den Kragen 10 schließt sich ein ebenfalls im wesentlichen kreiszylindrischer Kopplungsabschnitt 14 an, dessen Durchmesser wiederum kleiner als der Kragendurchmesser ist und mit dem der erfindungsgemäße Bohrer in eine Bohrmaschine eingespannt werden kann.

Obwohl der erfindungsgemäße Bohrer auch einstückig ausgebildet werden könnte, sind in der bevorzugten Ausführungsform gemäß Fig. 1 der Schneidbohrer 1 und der Fließbohrer 2 als separate, miteinander koppelbare Teile ausgeführt.

Zu diesem Zweck ist der Schneidbohrer 1 mit einem zylindrischen Kopplungsstift 6 versehen, der im zusammengesetzten Zustand in eine im Fließbohrer 2 ausgebildete Aufnahmebohrung eingeschoben ist. Zur Sicherung des Schneidbohrers 1 ist ein in der gezeigten Ausführungsform als Madenschraube 9 ausgebildetes Sicherungs- oder Klemmelement vorgesehen, das mittels eines Imbusschlüssels in eine von außen zur Aufnahmebohrung für den Kopplungsstift 6 führende Querbohrung im Kragen 10 einschraubbar ist.

Die verdrehsichere Anordnung des Schneidbohrers 1 bezüglich des Fließbohrers 2 ist durch eine Ausnehmung 13 mit im wesentlichen ebener Grundfläche gewährleistet, an der die Madenschraube 9 am Kopplungsstift 6 angreift.

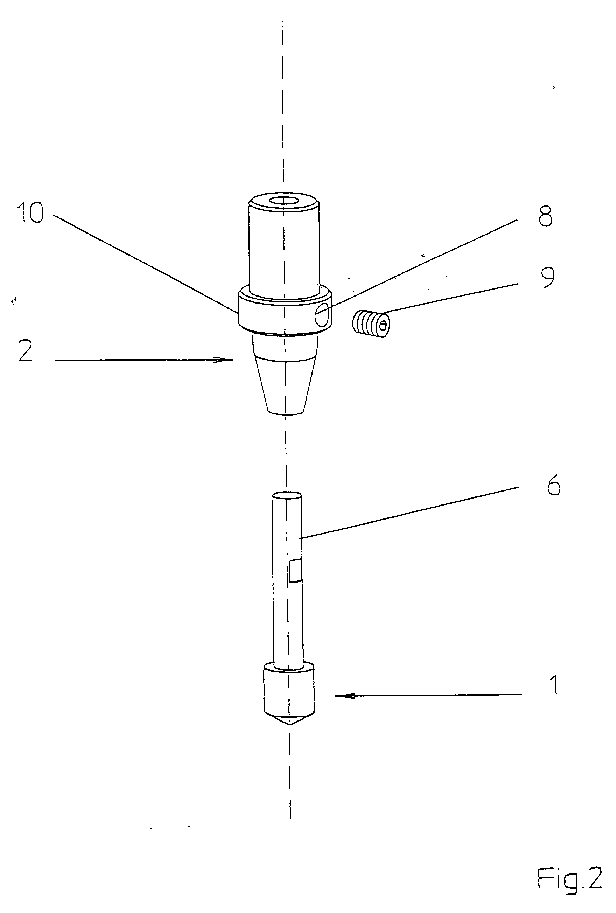

Fig. 2 zeigt die Einzelteile des erfindungsgemäßen Bohrers von Fig. 1 im zerlegten Zustand. Im Kragen 10 des Fließbohrers 2 ist die Querbohrung 8 für die Madenschraube 9 zu erkennen, die im zusammengesetzten Zustand den Kopplungsstift 6 festklemmt.

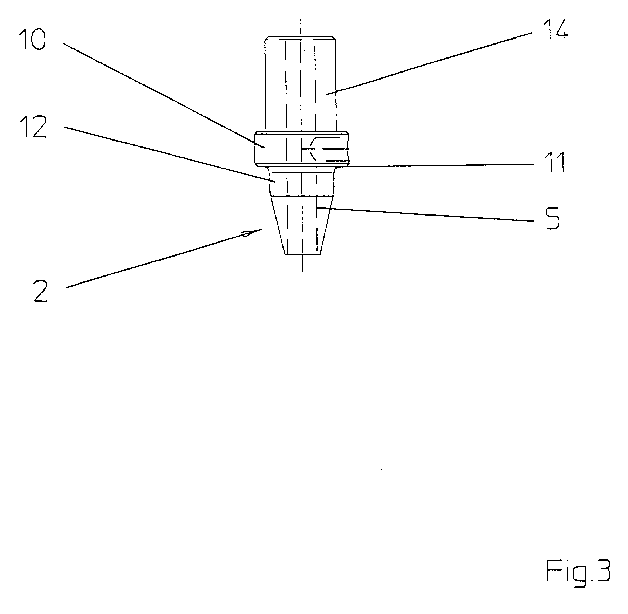

Fig. 3 zeigt eine Seitenansicht des Fließbohrers 2 des in den Fig. 1 und 2 gezeigten erfindungsgemäßen Bohrers, wonach der Übergang vom kreiszylindrischen Abschnitt 12, der sich an das breite Ende des Polygonabschnitts 5 anschließt, zum Kragen 10 eine Krümmung 11 aufweist. Diese Krümmung 11 dient dazu, am Ende des Bohrvorgangs das dem Kragen 10 zugewandte, vom Werkstück abstehende Buchsenende abzurunden.

Der Schneidbohrer 1 und der Fließbohrer 2 des gemäß der Erfindung ausgebildeten Bohrers sind bevorzugt so ausgelegt, daß das Schneidbohren mit einer niedrigeren Drehzahl als das Fließbohren erfolgt. Ebenso erfolgt der Vorschub beim Vorbohren mittels des Schneidbohrers 1 vorzugsweise mit einer kleineren Geschwindigkeit als beim Buchsenformen mittels des Fließbohrers 2.

Zu Beginn des Bohrvorgangs wird somit der über seinen Kopplungsabschnitt 14 mit einer Bohrmaschine verbundene erfindungsgemäße Bohrer auf eine Vorbohr-Drehzahl gebracht, die für den betreffenden Schneidbohrer und das Werkstückmaterial optimal geeignet ist. Daraufhin wird zunächst mit einem vergleichsweise langsamen Vorschub das Werkstück vorgebohrt und dann sowohl die Drehzahl als auch die Vorschubgeschwindigkeit zum Fließbohren erhöht.

Grundsätzlich könnten - eine geeignete Schneidbohrer/Fließbohrer-Kombination vorausgesetzt - der Schneidbohrer und der Fließbohrer auch mit gleichen Drehzahlen betrieben werden, wodurch eine Drehzahl-Anpassung entfallen würde. Dadurch würde die Anzahl von an der Bohrmaschine vorzunehmenden Einstellungen minimiert und ein verzögerungsfreies Herstellen von Buchsen in kürzester Zeit ermöglicht werden.

Besonders vorteilhaft ist die Verwendung des erfindungsgemäßen Bohrers beim Herstellen von Anschlußbuchsen in Kältemittel transportierenden Verteilerrohren, beispielsweise in Wärmetauschern, da die beim Vorbohren der Rohrwandung entstehenden Späne vom Schneidbohrer 1 nach außen abtransportierbar sind. Die Späne gelangen daher nicht in den Kühlkreislauf und können die Funktionsfähigkeit eines angeschlossenen Kompressors nicht beeinträchtigen. Durch die Verwendung des erfindungsgemäßen Bohrers können die die Sauberkeit des Kältemittels betreffenden DIN-Vorschriften ohne zusätzliche Maßnahmen problemlos eingehalten werden.

Typische Wandstärken von Kältemittel-Transportrohren aus Kupfer betragen etwa 2 mm. Die mittels des erfindungsgemäßen Bohrers herstellbaren Buchsen weisen bei diesen Wandstärken typischerweise eine Länge von etwa 4 mm auf. In derartige Buchsen können dann Anschlußrohre gesteckt werden, die anschließend mit der Buchse und somit dem Kältemittel-Transportrohr verlötet werden können. Es ist auch möglich, in die Buchsen Gewinde zu schneiden, um mit dazu passenden Gewinden versehene Anschlußrohre mit dem Kältemittel-Transportrohr zu verschrauben.

### Bezugszeichenliste

- 1: Schneidbohrer
- 2: Fließbohrer
- 3: dem Fließbohrer zugewandtes Ende des Schneidbohrers
- 4: schmales Ende des Fließbohrers
- 5: Polygonabschnitt
- 6: Kopplungsstift
- 8: Querbohrung
- 9: Madenschraube
- 10: Kragen
- 11: Krümmung
- 12: kreiszylindrischer Abschnitt
- 13: Ausnehmung
- 14: Kopplungsabschnitt
- 20: Längsachse

## Patentansprüche

1. Bohrer, insbesondere zur Herstellung von Rohranschlußbuchsen in Kältemittel transportierenden Rohren, mit einem die Bohrspitze bildenden und im wesentlichen zylindrischen Schneidbohrer (1) zum Vorbohren des Werkstücks und einem in Bohrvorschubrichtung hinter dem Schneidbohrer (1) angeordneten Fließbohrer (2) zum Herstellen einer Buchse aus dem die vorgebohrte Öffnung begrenzenden Werkstückmaterial, der sich in Richtung des Schneidbohrers (1) verjüngt und zumindest bereichsweise in einer sich senkrecht zu seiner Längsachse (20) erstreckenden Ebene eine nicht-kreisförmige, insbesondere polygonartige Querschnittsfläche aufweist.

2. Bohrer nach Anspruch 1,
dadurch **gekennzeichnet,**
daß der Durchmesser des dem Fließbohrer (2) zugewandten Endes (3) des Schneidbohrers (1) größer ist als der unmittelbar an den Schneidbohrer angrenzende Bohrerabschnitt, insbesondere als das schmale Ende (4) des Fließbohrers, so daß während des Vorbohrens anfallende Späne durch im Schneidbohrer (1) ausgebildete Spannuten vom Werkstück weg abtransportierbar sind.

3. Bohrer nach Anspruch 1 oder 2,
dadurch **gekennzeichnet,**
daß sich der Schneidbohrer (1) unmittelbar an das schmale Ende (4) des Fließbohrers (2) anschließt.

4. Bohrer nach einem der vorhergehenden Ansprüche,
dadurch **gekennzeichnet,**
daß er einstückig ausgeführt ist.

5. Bohrer nach einem der Ansprüche 1 bis 3,
dadurch **gekennzeichnet,**
daß er mehrteilig mit einem lösbar mit dem Fließbohrer (2) koppelbaren Schneidbohrer (1) ausgeführt ist.

6. Bohrer nach Anspruch 5,
dadurch **gekennzeichnet,**
daß der Fließbohrer (2) mit einer sich parallel zu seiner Längsachse (20) erstreckenden Aufnahmebohrung für einen Kopplungsstift (6) des Schneidbohrers (1) versehen ist.

7. Bohrer nach Anspruch 6,
dadurch **gekennzeichnet,**
daß im Fließbohrer (2) eine sich von außen zur Aufnahmebohrung erstreckende Querbohrung (8) ausgebildet ist, in die eine Madenschraube (9) zur Sicherung des Schneidbohrers (1) in der Aufnahmebohrung (5) einschraubbar ist.

8. Bohrer nach einem der vorhergehenden Ansprüche,
dadurch **gekennzeichnet,**
daß der Übergang zu einem sich in radialer Richtung erweiternden, im wesentlichen kreiszylindrischen Kragen (10) des Fließbohrers (2) eine Krümmung (11) aufweist, die am Ende des Bohrvorgangs ein Abrunden des dem Kragen (10) zugewandten Buchsenendes gestattet.

9. Bohrer nach einem der vorhergehenden Ansprüche,
dadurch **gekennzeichnet,**
daß der Schneidbohrer (1) mit zwei oder drei Schneidkanten und diesen jeweils zugeordneten Spannuten versehen ist.
